# EUROPÄISCHE PATENTANMELDUNG

(11) **EP 3 379 003 A1**
(43) Veröffentlichungstag der Anmeldung: **26.09.2018**
(21) Anmeldenummer: 17162840.7
(22) Anmeldetag: 24.03.2017
(51) Int. Cl.: E04B 1/80, B02C 4/08, B02C 4/32, E04B 1/76, E04B 1/74

(54) **EINBLASBARES DÄMMMATERIAL AUS STROH**

(71) Anmelder: Kasseckert, Leopold, 3072 Kasten (AT)
(72) Erfinder: Kasseckert, Leopold, 3072 Kasten (AT)
(74) Vertreter: Sonn & Partner Patentanwälte

(57) **Zusammenfassung**

Verfahren zum Herstellen eines einblasbaren Dämmmaterials (2) aus Stroh (3) umfassend einen Verarbeitungsschritt, bei dem das Stroh (3) in einer Quetscheinrichtung (7) zwischen Walzen (10, 11, 2) gequetscht wird, wobei ein Quetschspalt der Quetscheinrichtung (7) so gewählt ist, dass beim Quetschen die Knoten des Strohs (3) gequetscht werden.

## Beschreibung

Die Erfindung betrifft ein Verfahren zum Herstellen eines Dämmmaterials (insbesondere eines Wärmedämmstoffes) aus Stroh umfassend einen Verarbeitungsschritt, bei dem das Stroh gequetscht wird, sowie eine Vorrichtung zur Herstellung eines Dämmmaterials aus Stroh mit einer Quetscheinrichtung zum Quetschen des Strohs, sowie ein Dämmmaterial umfassend zerkleinertes Stroh.

Derartige Verfahren und Vorrichtungen zielen darauf ab, aus Stroh einen losen und rieselfähigen Dämmstoff herzustellen. Die Erfindung ist dabei nicht auf Dämmmaterialien beschränkt, die ausschließlich aus Stroh bestehen, sondern betrifft auch die Herstellung von Dämmmaterialien, die außer Stroh noch andere Rohmaterialien enthalten können. Stroh kann beispielsweise die Grundlage oder Basis eines Dämmmaterials bilden, dessen Eigenschaften durch Zusätze verändert und an spezielle Bedürfnisse angepasst werden kann.

Zur Dämmung praktisch beliebiger Hohlräume, insbesondere von Gebäuden, hat sich die Verwendung von einblasbarem Dämmmaterial zunehmend durchgesetzt. Dabei kann das Dämmmaterial entweder in Hohlräume in den errichteten Wänden des Gebäudes eingeblasen werden oder es kann vor der Errichtung in vorbereitete Fertigteile (z.B. vollständige Wandelemente) eingeblasen werden. Ein Vorteil dieser Art der Dämmung ist die fugenlose und verschnittfreie Einbringung, welche beispielsweise im Vergleich zur Einbringung von Dämmmatten schneller und mit weniger Materialverlust erfolgen kann. Derzeit werden als einblasbare Dämmmaterialien hauptsächlich Wärmedämmstoffe aus Zellulose, Holzfaser, Mineralfaser, mineralische Granulate oder EPS Granulate verwendet.

Die Verwendung eines Dämmmaterials aus Stroh hat gegenüber den genannten Materialien den Vorteil, dass der Rohstoff Stroh ein Abfallprodukt der Nahrungsmittelerzeugung ist und daher vergleichsweise günstig und in großen Mengen verfügbar ist. Aufgrund der im Stroh vorhandenen Kieselsäure hat ein Dämmmaterial aus Stroh auch aus brandschutztechnischer Sicht günstige Eigenschaften und es sind grundsätzlich keine chemischen Zusätze erforderlich, um das Brandverhalten zu verbessern. Demnach ist die Verwendung von Dämmmaterial aus Stroh auch aus ökologischer Sicht vorteilhaft.

Bislang ist es aber nicht gelungen, aus Stroh ein Dämmmaterial herzustellen, welches mit den herkömmlichen und mittlerweile weit verbreiteten Einblasmaschinen für die oben genannten, bereits verbreiteten einblasbaren Dämmstoffe verwendbar ist, d.h. mit diesen Maschinen auf eine geeignete Verdichtung einblasbar ist.

Das Einblasen von unbehandeltem Strohhäcksel als Dämmstoff ist grundsätzlich aus EP 2 360 326 B1 bekannt. Es hat sich allerdings herausgestellt, dass nur durch Häckseln kein mit herkömmlichen Einblasmaschinen auf eine geeignete Verdichtung (mindestens 90-130 kg/m³) einblasbares Dämmmaterial hergestellt werden kann. Dementsprechend wird bei dem in EP 2 360 326 B1 beschriebenen Verfahren der Strohhäcksel zuerst in ein liegendes Bauteil mechanisch optimiert eingeschüttet, das Bauteil anschließend zur Verdichtung gerüttelt und anschließend nötigenfalls durch Einblasen zusätzlicher Dämmstoff eingebracht.

Darüber hinaus offenbart die WO 2013/017687 A2 die Verarbeitung von Stroh in einem so genannten Prallreaktor zur Herstellung eines einblasbaren Dämmstoffs. Das Stroh wird im Prallreaktor in einem nichtschneidenden bzw. nichtspanenden Verfahren zerkleinert und verarbeitet. Genauer wird die Zerkleinerung durch heftige Stöße des Materials erzielt.

Außerhalb der Herstellung von Dämmmaterial sind weitere Verfahren zur Verarbeitung von Stroh bekannt. Beispielsweise zeigt die DE 8 229 421 U1 eine Zerfaserungsmaschine mit drei drehbar in einem Gehäuse gelagerten Zahnwellen mit parallel zueinander liegenden Drehachsen. Die Zähne der Zahnwellen greifen dabei in Umfangsrichtung nicht ineinander, sondern verlaufen nebeneinander, wobei die einzelnen Zahnwellen mit unterschiedlichen Drehgeschwindigkeiten und -richtungen betrieben werden. Das Stroh wird dabei zwischen den nebeneinander laufenden Zähnen zerfasert.

Im Zusammenhang mit einer Pulverisierung von Stroh, z.B. zur Verwendung als Biomasse-Brennstoff, zeigt die CN 204974018 U eine Strohmühle mit drei zylindrischen, horizontalen, gezahnten Walzen. Es bleibt allerdings offen, welche Funktion die Walzen erfüllen oder welche Veränderung des Strohs sie herbeiführen oder in welchem Abstand die Walzen angeordnet sind. Da das Stroh vertikal und ohne spezielle Fördertechnik zugeführt wird, ist davon auszugehen, dass das Stroh von oben in die Vorrichtung geschüttet wird. Der Abstand zwischen den Walzen muss daher groß genug sein, um auch bei zusammenhängenden Strohbündeln ein Blockieren der Walzen zu verhindern.

Es ist eine Aufgabe der Erfindung, eine effiziente Herstellung eines mit herkömmlichen Einblasmaschinen auf eine geeignete Verdichtung (mindestens 120 kg/m³) einblasbaren Dämmmaterials aus Stroh zu ermöglichen.

Das erfindungsgemäße Verfahren der eingangs angeführten Art sieht vor, dass beim Quetschen des Strohs die Knoten des Strohs gequetscht werden. Es hat sich herausgestellt, dass bei der Verwendung von Strohhäcksel, bei dem die Knoten nicht gequetscht wurden, mit einer herkömmlichen Einblasmaschine eine Verdichtung von höchstens 80 kg/m³ erzielbar ist. Eine herkömmliche Einblasmaschine erreicht typischer Weise einen maximalen Förderdruck von 400 mbar bei einem Durchmesser des Ausblasstutzens von etwa 7,6 cm (3 inch). Die Erfindung beruht auf der Erkenntnis, dass bisher erreichbare geringe Verdichtung auf die hohe strukturelle Widerstandsfähigkeit der Knoten des Strohs zurückzuführen ist. Das erfindungsgemäße Verfahren schlägt daher vor, diese Knoten, d.h. zumindest einen signifikanten Anteil der Knoten (z.B. mehr als 20 %, insbesondere mehr als 50 % der Knoten), zu quetschen. Wie sich herausstellt, kann mit dem entsprechend verarbeitenden Stroh beim Einblasen mit einer herkömmlichen Einblasmaschine eine Verdichtung von über 100 kg/m³, insbesondere über 120 kg/m³, erzielt werden.

In entsprechender Weise sieht die erfindungsgemäße Vorrichtung der eingangs angeführten Art vor, dass die Quetscheinrichtung eingerichtet ist, die Knoten des Strohs zu Quetschen. Insbesondere kann ein Quetschspalt der Quetscheinrichtung so gewählt sein, dass beim Quetschen in der Quetscheinrichtung die Knoten des Strohs gequetscht werden.

Dementsprechend sind bei dem erfindungsgemäßen Dämmmaterial die Knoten des Strohs gequetscht. Ein signifikanter Anteil der Knoten kann daher insbesondere Brüche oder Risse in einer Knotenwand aufweisen. Die Dichte und Komprimierbarkeit des Dämmmaterials ermöglichen, dass dieses mit einer herkömmlichen Einblasmaschine auf eine Verdichtung von über 100 kg/m³, vorzugsweise zwischen 100 und 150 kg/m³, insbesondere zwischen 120 und 130 kg/m³, in einen zu dämmenden Hohlraum eingeblasen werden kann.

Als Knoten (lateinisch nodus) wird der Bereich der Sprossachse bezeichnet, an dem ein oder mehrere Blätter ansetzen. Im Bereich eines Knotens sind Strohhalme häufig verdickt, was zu einer größeren Festigkeit und einem größeren Widerstand gegen Kompression führt. Beim Quetschen werden die Knoten oder Knubbel zerdrückt und teilweise gebrochen. Das Quetschen oder Zerdrücken erfolgt zwischen zwei Oberflächen, welche gegeneinander gepresst werden.

Im Zusammenhang mit dem Quetschen der Knoten hat es sich als vorteilhaft herausgestellt, wenn die Halme des Strohs vor dem Quetschen vereinzelt werden. Dadurch kann der Anteil der gequetschten Knoten erhöht werden, weil ansonsten durch übereinander angeordneten Knoten verhindert werden könnte, dass benachbarte einzelne Knoten gequetscht werden. Bei der vorliegenden Vorrichtung ist es daher vorteilhaft, wenn eine Zuführung des Strohs zur Quetscheinrichtung vorgesehen ist, welche eingerichtet ist, die Halme des Strohs vor dem Quetschen zu vereinzeln.

Als besonders geeignet hat sich herausgestellt, dass eine Spaltbreite eines Quetschspalts beim Quetschen des Strohs zwischen 0,8 und 1,6 mm, vorzugsweise zwischen 1,0 und 1,4 mm, insbesondere etwa 1,2 mm, beträgt. Dementsprechend ist es günstig, wenn die Quetscheinrichtung eine Spaltbreite eines Quetschspalts der Quetscheinrichtung zwischen 0,8 und 1,6 mm, vorzugsweise zwischen 1,0 und 1,4 mm, insbesondere etwa 1,2 mm, aufweist. Diese Spaltbreiten wurden als besonders geeignet für Getreidestroh, insbesondere Weizenstroh, ermittelt. Der Quetschspalt ist vergleichbar einem Mahlspalt bei andersartigen Anwendungen, welche häufig nicht nur Quetschen, sondern auch Reiben. Die Spaltbreite des Quetschspalts definiert den Querschnitt, auf den das Stroh einschließlich der Knoten gequetscht wird.

Abhängig von der Art und Struktur des verarbeiteten Strohs können selbstverständlich auch andere Spaltbreiten gewählt werden, um die gewünschte Verdichtung beim Einblasen des resultierenden Dämmmaterials zu erzielen. Es ist daher günstig, wenn bei der vorliegenden Vorrichtung ein Quetschspalt der Quetscheinrichtung einstellbar ist.

Weiters ist es vorteilhaft, wenn die Quetscheinrichtung eine kontinuierliche Verarbeitung des Strohs erlaubt. Eine kontinuierliche Verarbeitung ist im Vergleich zu einer diskreten Verarbeitung separater Batches allgemein weniger fehleranfällig, sowohl im Hinblick auf die Belastung mechanischer Komponenten als auch im Hinblick auf eine optimale Steuerung der Vorrichtung.

Bevorzugt kann das Stroh zwischen zumindest zwei gegenüberliegenden, gegenläufig drehenden Walzen gequetscht werden, wobei die jeweils gegenüberliegenden Walzen mit einer betragsmäßig im Wesentlichen gleichen Umfangsgeschwindigkeit (z.B. zwischen 20 und 60 m/s) drehen. Dementsprechend kann bei der vorliegenden Vorrichtung die Quetscheinrichtung vorzugsweise zumindest zwei gegenüberliegende, um parallele Drehachsen drehbar gelagerte Walzen aufweisen und zum gegenläufigen Antrieb der Walzen mit einer betragsmäßig im Wesentlichen gleichen Umfangsgeschwindigkeit und zur (kontinuierlichen) Durchführung des Strohs zwischen den Walzen eingerichtet sein. Durch die im Wesentlichen gleiche Umfangsgeschwindigkeit kann sichergestellt werden, dass das Stroh zwischen den Walzen nicht übermäßig zerrieben und zerfasert wird, weil dadurch die vorteilhaften Dämmeigenschaften beeinträchtigt würden. Die Verwendung von Walzen hat den Vorteil, dass das Stroh in einem kontinuierlichen Prozess verarbeitet werden kann (anders als z.B. in einer Presse), was die Fehleranfälligkeit der Verarbeitung reduziert. Die Walzen können z.B. aus Stahl hergestellt sein; grundsätzlich ist jedes Materials geeignet, welches im Betrieb (d.h. bei der verwendeten Drehzahl) eine ausreichende Kraft auf die Knoten überträgt, um diese zu quetschen und zu zerdrücken.

Im Zusammenhang mit der Verwendung von Walzen zum Quetschen des Strohs ist es vorteilhaft, wenn die Walzen achsparallele oder schräge Nuten aufweisen. Insbesondere können die Walzen als Zahnwalzen oder Zahnwellen ausgebildet sein. Dadurch wird die Förderfunktion der Walzen, welche diese neben der Quetschfunktion ausüben, verbessert, wobei das Stroh in die Nuten aufgenommen wird.

Bei der Verwendung von Walzen mit Nuten ist es besonders günstig, wenn die Walzen in der Art eines Stirnradgetriebes ineinander greifen. Die Bereiche zwischen den Nuten der Walzen bilden dabei Zähne, welche in Umfangsrichtung in die Nuten gegenüberliegender Walzen eingreifen. Die Verzahnung zwischen zwei Walzen kann dabei als Geradverzahnung, Schrägverzahnung oder Doppelschrägverzahnung vorgesehen sein, wobei die Zähne und Nuten der Walzen jeweils entsprechend angepasst sind.

Alternativ oder zusätzlich zu den Nuten kann zumindest eine Walze eine strukturierte (d.h. eine nicht-glatte) Oberfläche aufweisen. Die Struktur der Oberfläche ist dabei vorzugsweise so gewählt, dass die Reibung in Umfangsrichtung erhöht wird (z.B. eine Strukturierung mit quer oder schräg zur Drehachse verlaufenden Rippen oder Kerben oder mit punktuellen Vertiefungen oder Erhöhungen, etwa in der Art von Noppen oder Zacken). Indem die Reibung mit dem beförderten Stroh erhöht wird, kann einem Verstopfen der Quetscheinrichtung entgegen gewirkt werden.

Weiters hat es sich im Bezug auf die Walzen als vorteilhaft herausgestellt, wenn zumindest eine Walze gefedert gelagert ist. Die Lagerung ist dabei derart verschiebbar, dass der Abstand zwischen gegenüberliegenden Walzen vorübergehend und entgegen der Rückstellkraft der Federung erhöht werden kann, d.h. der Quetschspalt vergrößert werden kann. Die Federung kann dabei so eingestellt sein, dass unkomprimierbare Verunreinigungen (z.B. Steine) durch die Walzen befördert werden können und die Walzen dadurch nicht blockiert werden. Die Federung ist vorzugsweise auf die Steifigkeit der Knoten des Strohs abgestimmt, d.h. zumindest hart genug eingestellt, dass die Knoten des Strohs gequetscht werden.

Für die Zuführung des Strohs zwischen die Walzen hat es sich als besonders günstig herausgestellt, wenn das Stroh zwischen die Walzen eingesaugt wird. Dabei können auf effiziente und rasche Weise vereinzelte Strohhalme zugeführt werden. Ein Vorteil des Einsaugens ist, dass die Zuführgeschwindigkeit des Strohs durch Anwendung eines geeigneten Druckunterschieds einstellbar ist. Ein weiterer Vorteil des Einsaugens ist, dass die Staubentwicklung bei der Verarbeitung kontrollierbar ist. In der Praxis wird dabei die Anlage "von hinten" eingeschaltet, d.h. beginnend mit einer Absaugeinrichtung und dann die einzelnen Verarbeitungsmaschinen stromaufwärts. Alternativ kann das Stroh zwischen die Walzen eingeblasen werden (z.B. mit einer Einblaseinrichtung), wobei allerdings die Staubentwicklung und insbesondere der Austritt von Staub bei der Verarbeitung in die Umgebung schlechter kontrollierbar ist.

Dementsprechend kann die erfindungsgemäße Vorrichtung vorzugsweise eine Absaugeinrichtung zur Beförderung des Strohs durch die Quetscheinrichtung umfassen. Die Absaugeinrichtung kann insbesondere stromabwärts der Quetscheinrichtung angeordnet und mit einem Auslass der Quetscheinrichtung im Wesentlichen luftdicht verbunden sein. Die Absaugeinrichtung kann somit einen Unterdruck in der Quetscheinrichtung erzeugen. Falls die Quetscheinrichtung durch zumindest zwei gegenüberliegenden Walzen gebildet ist, kann beispielsweise mit einer stromaufwärts der Walzen angeordneten Düse mit einer flachen Mündung, die in Richtung des Quetschspalts zwischen den Walzen mündet, eine kontinuierliche und gleichmäßige Zuführung von Stroh zwischen die Walzen erzielt werden. Als Düse kann z.B. ein flach gedrücktes Einblasrohr verwendet werden, wobei die Breite der Düse vorzugsweise ungefähr der Länge der Walzen entspricht, z.B. etwa 30 cm beträgt.

Um die Zuverlässigkeit der Vorrichtung zu verbessern, können zumindest zwei Quetscheinrichtungen vorgesehen sein, die vorzugsweise mit einer gemeinsamen Absaugeinrichtung verbunden sein können. Die Absaugeinrichtung hat im Vergleich zur Quetscheinrichtungen eine höhere Zuverlässigkeit, d.h. ein Stillstand der Vorrichtung wird häufiger durch ein Verstopfen oder Blockieren einer Quetscheinrichtung verursacht als durch einen Ausfall der Absaugeinrichtung. Bei zumindest zwei Quetscheinrichtungen kann eine weiter betrieben werden, während die andere gewartet wird. Außerdem kann mit zwei oder mehr Quetscheinrichtungen ein höherer Durchsatz erzielt werden, wobei die Vorrichtung nur geringfügig vergrößert werden muss, weil die Quetscheinrichtung im Verhältnis zur Absaugeinrichtung vergleichsweise klein ist und zugleich der limitierende Faktor für den maximalen Durchsatz ist.

Vorzugsweise wird die Drehzahl der Walzen so eingestellt, dass die Umfangsgeschwindigkeit der Walzen größer ist als die Fluggeschwindigkeit des eingesaugten (oder eingeblasenen) Strohs. Bei einer niedrigeren Umfangsgeschwindigkeit steigt die Wahrscheinlichkeit von Verstopfungen, welche aufgrund der begrenzten Leistung des Antriebs der Walzen zu einem Abwürgen der Quetscheinrichtung führen kann. Eine zu hohe Drehzahl kann führt andererseits zu einer unnötig hohen mechanischen Belastung der Walzen und die einem höheren Energieverbrauch des Antriebs. Eine optimale Drehzahl kann in der Praxis durch Probieren und Anpassen der Zuführrate des Strohs bzw. Abstimmen mit der durch eine Absaugeinrichtung erzielten Druckdifferenz ermittelt werden.

Weiteres hat es sich als günstig herausgestellt, wenn die Halme des Strohs vor dem Quetschen zerkleinert werden und die zerkleinerten Halme gequetscht werden. Die Halme können beispielsweise vor dem Quetschen gehäckselt werden, vorzugsweise in einer Strohmühle. Die Länge der so zerkleinerten Halme kann vorzugsweise bis zu 4 cm betragen. Dementsprechend kann die erfindungsgemäße Vorrichtung vorzugsweise eine erste Zerkleinerungseinrichtung umfassen, welche derart mit der Quetscheinrichtung verbunden ist, dass im Betrieb das in der ersten Zerkleinerungseinrichtung zerkleinerte und/oder aufgespaltene Stroh der Quetscheinrichtung zugeführt wird.

Darüber hinaus es es vorteilhaft, wenn das Stroh nach dem Quetschen (gegebenenfalls erneut und zusätzlich) zerkleinert wird. Das kann beispielsweise ebenfalls durch Häckseln, vorzugsweise in einer Strohmühle, erfolgen. Die Länge der resultierenden gequetschten Halmstücke kann insbesondere zwischen 20 und 40 mm betragen. Es hat sich herausgestellt, dass auf diese Weise die Wahrscheinlichkeit von Verstopfungen der Einblasmaschine gesenkt werden kann. Dementsprechend kann die erfindungsgemäße Vorrichtung vorzugsweise eine zweite Zerkleinerungseinrichtung umfassen, welche derart mit der Quetscheinrichtung verbunden ist, dass im Betrieb das in der Quetscheinrichtung gequetschte Stroh der zweiten Zerkleinerungseinrichtung zugeführt wird. Damit das Stroh seine vorteilhaften Eigenschaften als Dämmmaterial beibehält, ist es vorteilhaft, wenn es nicht zu stark zerkleinert wird. Insbesondere sollen Faserlängen des Strohs bis mindestens 2 mm, vorzugsweise bis mindestens 5 mm, insbesondere bis mindestens 25 mm, erhalten bleiben.

Schließlich hat es sich als besonders vorteilhaft herausgestellt, wenn das Stroh einen relativ hohen Reinheitsgrad aufweist (d.h. im Vergleich zu anderen am Markt erhältlichen Reinheitsgraden). Ein geringerer Reinheitsgrad deutet auf erhebliche Verunreinigung durch Unkraut hin. Bei der Verwendung von Stroh des oben angegebenen Reinheitsgrades können mit dem resultierenden Dämmmaterial optimale Werte für die Verdichtung erzielt werden.

Im Zusammenhang mit der erfindungsgemäßen Vorrichtung hat es sich als besonders günstig herausgestellt, wenn die Vorrichtung in einem ISO-Container installierbar ist. D.h. die Außenabmessungen der Vorrichtung sind vorzugsweise kleiner als die Innenabmessungen eines ISO-Containers. Die Länge der Vorrichtung ist vorzugsweise kleiner als 5,9 m (20 Fuß ISO-Container) oder kleiner als 12 m (40 Fuß ISO-Container), die Breite der Vorrichtung ist vorzugsweise kleiner als 2,35 m und die Höhe der Vorrichtung ist vorzugsweise kleiner als 2,38 m. Das Gewicht der Vorrichtung ist vorzugsweise kleiner als 21,67 Tonnen oder kleiner als 26,48 Tonnen. Eine in einem ISO-Container installierte Vorrichtung kann als transportable Produktionsbox bereitgestellt werden. Das erleichtert einen Transport der Vorrichtung an einen Ort, an dem eine große Menge Dämmmaterial benötigt wird und Stroh vorhanden ist. Der Transport der Vorrichtung erspart dann den Strohtransport und ist somit insbesondere aus ökologischer Sicht vorteilhaft. Die Vorrichtung kann vorzugsweise einen integrierten Motor umfassen, welcher zumindest die Quetscheinrichtung antreibt, sodass für den Betrieb an einem ausgewählten Standort neben Stroh nur Strom oder Treibstoff erforderlich sind.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 schematisch eine Übersicht über eine erfindungsgemäße Vorrichtung zur Herstellung eines Dämmmaterials aus Stroh mit einer Quetscheinrichtung;
Fig. 2 schematisch einen Schnitt der Quetscheinrichtung gemäß Fig. 1 mit drei Walzen;
Fig. 3 schematisch einen Grundriss der Quetscheinrichtung gemäß Fig. 1 und 2; und
Fig. 4 schematisch eine Detailansicht des Schnitts gemäß Fig. 2, wobei die Schnitte der Walzen maßstabsgetreu abgebildet sind.

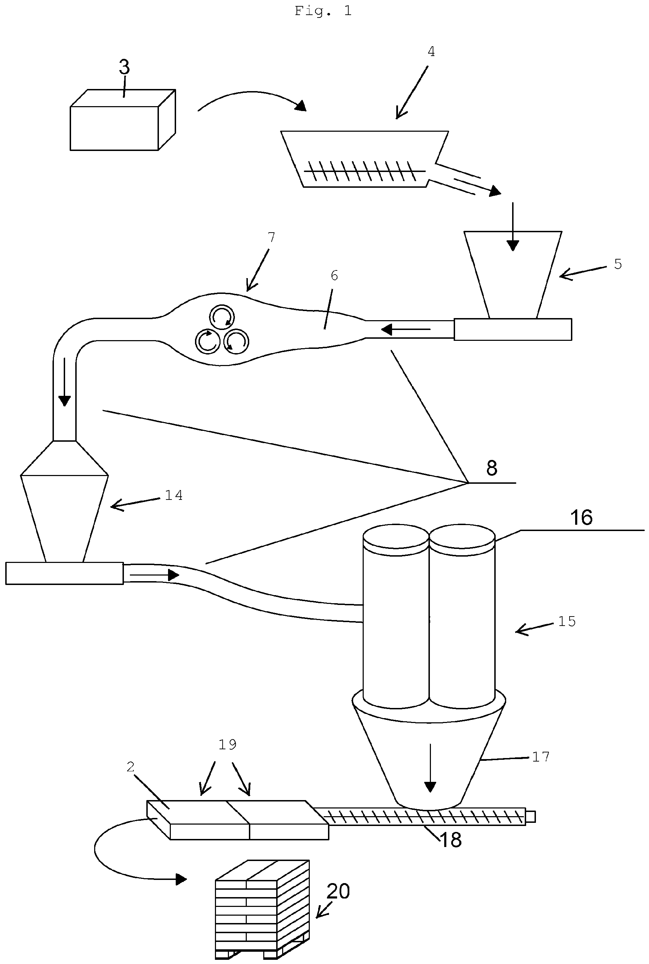

Fig. 1 zeigt eine Vorrichtung 1 zur Herstellung eines Dämmmaterials 2 aus Stroh 3. Die Pfeile geben die Bewegungsrichtung des verarbeiteten Materials an. Das Stroh 3, welches beispielsweise als Ballen vorliegt, wird zunächst in eine Vorverarbeitungseinheit 4 eingeführt. In der Vorverarbeitungseinheit 4 wird das Stroh 3 aufgelockert und zerkleinert. Das aufgelockerte und zerkleinerte Stroh wird anschließend einer ersten Zerkleinerungseinrichtung 5 übergeben (z.B. eingeschüttet), welche stromabwärts der Vorverarbeitungseinheit 4 angeordnet ist. In der ersten Zerkleinerungseinrichtung 5 werden die Strohhalme auf eine Länge von etwa 4 cm zerkleinert. Die erste Zerkleinerungseinrichtung 5 kann z.B. eine Strohmühle des Herstellers voran Maschinen GmbH, Österreich, sein.

Das in der ersten Zerkleinerungseinrichtung 5 zerkleinerte Stroh wird mithilfe einer Zuführung 6 einer Quetscheinrichtung 7 der Vorrichtung 1 zugeführt. Beginnend mit der ersten Zerkleinerungseinrichtung 5 wird das Stroh in einem im Wesentlichen luftdichten Luftkanalsystem 8 der Vorrichtung 1 geführt. Die Leitungen und Verbindungen des Luftkanalsystems 8 sind so ausgeführt, dass sie einem statischen Unterdruck von etwa 2200 Pascal standhalten.

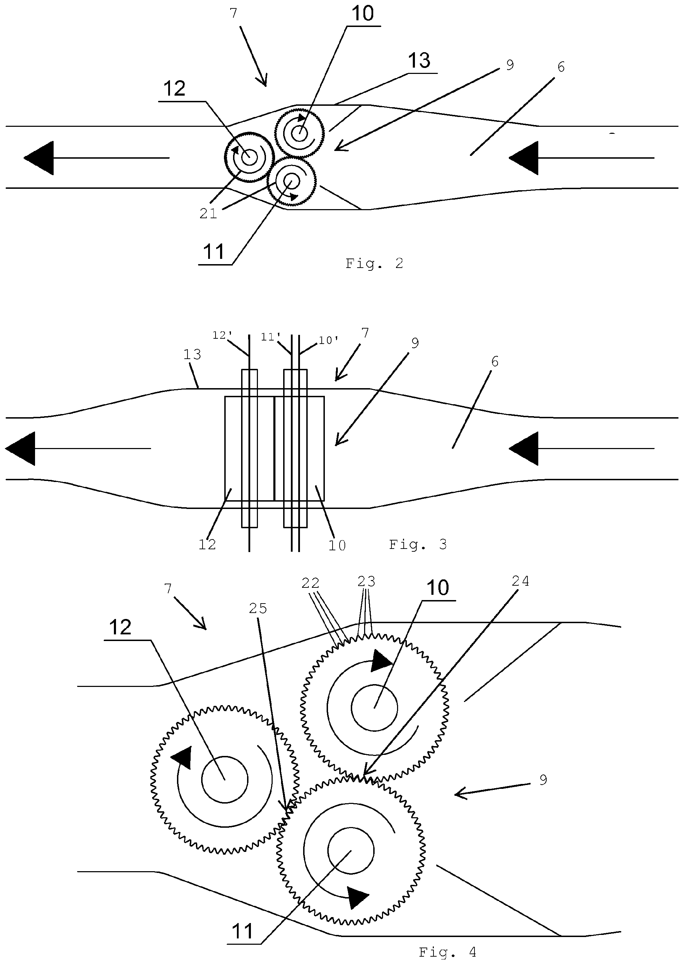

Die Zuführung 6 ist in der Art einer Düse mit einer flachen Mündung 9 ausgebildet (s. Fig. 2). Die Zuführung 6 ist eingerichtet, die Halme des Strohs vor dem Quetschen zu vereinzeln, sodass der Quetscheinrichtung 7 vorzugsweise einzelne Strohhalme zugeführt werden.

Die Quetscheinrichtung 7 ist zum Quetschen des Strohs eingerichtet. Die Quetscheinrichtung 7 umfasst drei Walzen 10, 11, 12, die in einem Gehäuse 13 um parallele Drehachsen 10', 11', 12' drehbar gelagert sind (vgl. Fig. 2-4). Die Walzen 10, 11, 12 sind paarweise gegenüberliegend angeordnet und bilden ein erstes Walzenpaar 10, 11 und ein zweites Walzenpaar 11, 12. Die gegenüberliegenden Walzen 10, 11, 12 eines Walzenpaares sind dabei im Betrieb gegenläufig angetrieben bzw. ist die Vorrichtung 1 zum gegenläufigen Antrieb der Walzen eingerichtet. Die Umfangsgeschwindigkeit der Walzen 10, 11; 11; 12 eines Paares sind betragsmäßig im Wesentlichen gleich. Im Betrieb der gezeigten Anordnung sind die Umfangsgeschwindigkeiten sämtlicher Walzen 10, 11, 12 der Quetscheinrichtung 7 gleich, weil die zweite, mittlere Walze 11 beiden Walzenpaaren 10, 11; 11; 12 angehört. Die von der Zuführung 6 kommenden Strohhalme werden aufgrund des Unterdrucks zunächst zwischen den Walzen 10, 11 des ersten Walzenpaares eingesaugt. Dabei ist die Umfangsgeschwindigkeit der Walzen 10, 11, 12 etwas größer als die Fluggeschwindigkeit der Strohhalme, sodass eine Ansammlung von Strohhalmen vor dem ersten Walzenpaar 10, 11 vermieden wird. Zwischen den Walzen 10, 11 des ersten Walzenpaares wird ein Teil der Knoten des Strohs gequetscht während das Stroh aufgrund der Drehung der Walzen 10, 11 zum zweiten Walzenpaar 11, 12 gefördert wird. Zwischen den Walzen 11, 12 des zweiten Walzenpaares wird ein weiterer Teil der Knoten des Strohs gequetscht.

Stromabwärts der Quetscheinrichtung 7 weist die Vorrichtung 1 eine zweite Zerkleinerungseinrichtung 14 auf. Die zweite Zerkleinerungseinrichtung 14 ist derart mit der Quetscheinrichtung 7 verbunden, dass im Betrieb das in der Quetscheinrichtung 7 gequetschte Stroh der zweiten Zerkleinerungseinrichtung 14 zugeführt wird. In der zweiten Zerkleinerungseinrichtung 14 werden die gequetschten Strohhalme auf eine Länge zwischen 10 und 20 mm zerkleinert. Die zweite Zerkleinerungseinrichtung 14 kann z.B. eine Strohmühle des Herstellers voran Maschinen GmbH, Österreich, sein.

Die Vorrichtung 1 umfasst weiters eine Absaugeinrichtung 15. Es kann beispielsweise eine Absaugeinrichtung 15 des Herstellers Holzprofi Pichlmann GmbH, Österreich, verwendet werden. Die Absaugeinrichtung 15 unterstützt die Beförderung der Strohhalme durch die beiden Zerkleinerungsvorrichtungen 5, 14 und durch die Quetscheinrichtung 7, indem sie einen Unterdruck im Luftkanalsystem 8 erzeugt. Entsprechend der dargestellten Produktionslinie kann zumindest eine zweite Produktionslinie (mit separater Quetscheinrichtung und Zerkleinerungsvorrichtungen) mit derselben Absaugeinrichtung 15 verbunden sein, sodass die Absaugeinrichtung 15 Strohhalme aus mehreren Produktionslinien sammelt. Die schematisch dargestellte Absaugeinrichtung 15 führt nach oben die gefilterte Abluft 16 ab und nach unten mit Überdruck das hergestellte Dämmmaterial in einen trichterförmigen Strohfang 17. Im Strohfang 17 wird das Dämmmaterial verdichtet und in eine Förderschnecke 18 abgegeben. Die Förderschnecke 18 komprimiert das Dämmmaterial auf eine gewünschte Packdichte von ca. 130-170 kg/m³ zum Füllen einer Packung 19, z.B. eines Sacks. Die gefüllten Packungen 19 werden anschließend zur Auslieferung auf Paletten 20 geschlichtet und zum Einsatzort verbracht, wo die Dämmung durch Einfüllen des Packungsinhalts in eine herkömmliche Einblasmaschine hergestellt werden kann.

Fig. 2 bis 4 zeigen die Quetscheinrichtung 7 gemäß Fig. 1 mehr im Detail. Der Drehsinn der Walzen 10, 11, 12 ist durch Richtungspfeile 21 angegeben. Wie anhand der dargestellten Walzenprofile erkennbar ist, weisen die Walzen 10, 11, 12 achsparallele Nuten 22 auf. Die Bereiche zwischen den Nuten 22 sind als Zähne 23 ausgebildet. Die Walzen 10, 11; 11, 12 eines Walzenpaares, insbesondere deren Zähne 23 und Nuten 22, greifen in der Art eines Stirnradgetriebes ineinander, wie insbesondere in Fig. 4 ersichtlich. Der Durchmesser der Walzen beträgt in diesem Ausführungsbeispiel jeweils 120 mm. Die Walzen haben jeweils 68 Zähne mit einer Zahntiefe von etwa 6 mm.

Zwischen den Walzen 10, 11; 11, 12 eines Walzenpaares weist die Quetscheinrichtung 7 einen Quetschspalt 24, 25 auf. Der Quetschspalt 24, 25 ist der kleinste Abstand zwischen den Walzen 10, 11; 11, 12 eines Walzenpaares in radiale Richtung. Im vorliegenden Beispiel entspricht der Quetschspalt 24, 25 jeweils dem Abstand zwischen der radialen Außenfläche eines Zahnes 23 einer Walze und der radialen Innenfläche einer Nut 22 der gegenüberliegenden Walze. Die Spaltbreite des Quetschspalts 24, 25 ist einstellbar, beispielsweise mit einem verschiebbaren Lager (siehe unten), und beträgt in der dargestellten Position etwa 1,2 mm. In dieser Position ist die Quetscheinrichtung 7 eingerichtet, die Knoten von Weizenstroh zu Quetschen.

Die beiden oberen Walzen 10, 12, welche unterschiedlichen Walzenpaaren 10, 11; 11, 12 zugeordnet sind, sind gefedert gelagert. D.h. die Lager dieser Walzen 10, 12 sind nicht starr mit dem Lager der mittleren Walze 11 verbunden, sondern gegen die Rückstellkraft einer Feder normal auf die Drehachse der mittleren Walze 11 von dem Lager der mittleren Walze 11 verschiebbar. Die Rückstellkraft der Feder beträgt ungefähr 10-25 kN.

## Patentansprüche

1. Verfahren zum Herstellen eines Dämmmaterials (2) aus Stroh (3) umfassend einen Verarbeitungsschritt, bei dem das Stroh (3) gequetscht wird, **dadurch gekennzeichnet, dass** beim Quetschen die Knoten des Strohs (3) gequetscht werden.

2. Verfahren nach Anspruch 1, **dadurch gekennzeichnet, dass** die Halme des Strohs (3) vor dem Quetschen vereinzelt werden.

3. Verfahren nach Anspruch 1 oder 2, **dadurch gekennzeichnet, dass** eine Spaltbreite eines Quetschspalts beim Quetschen des Strohs zwischen 0,8 und 1,6 mm, vorzugsweise zwischen 1,0 und 1,4 mm, insbesondere etwa 1,2 mm, beträgt.

4. Verfahren nach einem der Ansprüche 1 bis 3, **dadurch gekennzeichnet, dass** das Stroh (3) zwischen zumindest zwei gegenüberliegenden, gegenläufig drehenden Walzen (10, 11, 12) gequetscht wird, wobei die jeweils gegenüberliegenden Walzen (10, 11; 11, 12) mit einer betragsmäßig im Wesentlichen gleichen Umfangsgeschwindigkeit drehen.

5. Verfahren nach einem der Ansprüche 1 bis 4, **dadurch gekennzeichnet, dass** die Halme des Strohs (3) vor dem Quetschen zerkleinert werden und die zerkleinerten Halme gequetscht werden.

6. Verfahren nach einem der Ansprüche 1 bis 5, **dadurch gekennzeichnet, dass** das Stroh (3) nach dem Quetschen zerkleinert wird.

7. Vorrichtung (1) zur Herstellung eines Dämmmaterials (2) aus Stroh (3) mit einer Quetscheinrichtung (7) zum Quetschen des Strohs, **dadurch gekennzeichnet, dass** die Quetscheinrichtung (7) eingerichtet ist, die Knoten des Strohs (3) zu Quetschen.

8. Vorrichtung (1) nach Anspruch 7, **gekennzeichnet durch** eine Zuführung (6) des Strohs (3) zur Quetscheinrichtung (7), welche eingerichtet ist, die Halme des Strohs (3) vor dem Quetschen zu vereinzeln.

9. Vorrichtung (1) nach Anspruch 7 oder 8, **dadurch gekennzeichnet, dass** die Quetscheinrichtung (7) eine Spaltbreite eines Quetschspalts der Quetscheinrichtung (7) zwischen 0,8 und 1,6 mm, vorzugsweise zwischen 1,0 und 1,4 mm, insbesondere etwa 1,2 mm, aufweist.

10. Vorrichtung (1) nach einem der Ansprüche 7 bis 9, **dadurch gekennzeichnet, dass** die Quetscheinrichtung (7) zumindest zwei gegenüberliegende, um parallele Drehachsen drehbar gelagerte Walzen (10, 11, 12) aufweist und zum gegenläufigen Antrieb der Walzen (10, 11, 12) mit einer betragsmäßig im Wesentlichen gleichen Umfangsgeschwindigkeit und zur Durchführung des Strohs (3) zwischen den Walzen (10, 11, 12) eingerichtet ist.

11. Vorrichtung (1) nach Anspruch 10, **dadurch gekennzeichnet, dass** die Walzen (10, 11, 12) achsparallele oder schräge Nuten aufweisen, wobei die Walzen (10, 11, 12) vorzugsweise in der Art eines Stirnradgetriebes ineinander greifen.

12. Vorrichtung (1) nach Anspruch 10 oder 11, **dadurch gekennzeichnet, dass** zumindest eine Walze (10, 12) gefedert gelagert ist.

13. Vorrichtung (1) nach einem der Ansprüche 7 bis 12, **gekennzeichnet durch** eine erste Zerkleinerungseinrichtung (5), welche derart mit der Quetscheinrichtung (7) verbunden ist, dass im Betrieb das in der ersten Zerkleinerungseinrichtung (5) zerkleinerte Stroh (3) der Quetscheinrichtung (7) zugeführt wird.

14. Vorrichtung (1) nach einem der Ansprüche 7 bis 13, **gekennzeichnet durch** eine zweite Zerkleinerungseinrichtung (14), welche derart mit der Quetscheinrichtung (7) verbunden ist, dass im Betrieb das in der Quetscheinrichtung (7) gequetschte Stroh (3) der zweiten Zerkleinerungseinrichtung (14) zugeführt wird.

15. Dämmmaterial (2) umfassend zerkleinertes Stroh (3), **dadurch gekennzeichnet, dass** die Knoten des Strohs (3) gequetscht sind.
